**Europäisches Patentamt**

**European Patent Office**

**Office européen des brevets**

(19)

(11) Veröffentlichungsnummer: **0 074 682**

**B1**

(12) **EUROPÄISCHE PATENTSCHRIFT**

(45) Veröffentlichungstag der Patentschrift:
20.07.88

(51) Int. Cl.⁴: **H 04 N 9/68**

(21) Anmeldenummer: **82201097.1**

(22) Anmeldetag: **08.09.82**

(54) Schaltungsanordnung zum Einstellen der Amplitude des Farbsignals.

(30) Priorität: **12.09.81 DE 3136216**

(43) Veröffentlichungstag der Anmeldung:
**23.03.83 Patentblatt 83/12**

(45) Bekanntmachung des Hinweises auf die Patenterteilung:
**20.07.88 Patentblatt 88/29**

(84) Benannte Vertragsstaaten:
**DE FR GB IT**

(56) Entgegenhaltungen:
FUNKSCHAU, Band 52, Nr. 15, Juli 1980, Seiten 41-44, München DE; "Digitalisierung im Fernsehempfänger"
ELECTRONICS INTERNATIONAL, Band 54, Nr. 16, August 1981, Seiten 97-103, New York, USA; T. FISCHER: "Digital VLSI breeds next-generation TV receivers"
FERNSEH- UND KINO-TECHNIK, Band 35, Nr. 9, 1981, Seiten 317-323, Heidelberg, DE; W. WELTERSBACH et al.: "Digitale Videosignalverarbeitung im Farbfernsehempfänger"

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten: **FR GB IT**

(72) Erfinder: **Ruprecht, Jürgen, Grandweg 35, D-2000 Hamburg 54 (DE)**
Erfinder: **Weltersbach, Wolfgang, Goldregenweg 23, D-2000 Hamburg 54 (DE)**

(74) Vertreter: **Poddig, Dieter, Dipl.- Ing., Philips Patentverwaltung GmbH Wendenstrasse 35 Postfach 10 51 49, D-2000 Hamburg 1 (DE)**

EP 0 074 682 B1

**0 074 682**

**Beschreibung**

Die Erfindung betrifft eine Schaltungsanordnung zum Einstellen der Amplitude des von dem Gesamt-Farbbildsignalgemisch abgetrennten Farbartsignals in einem festen Verhältnis zum Leuchtdichtesignal mittels eines einstellbaren Verstärkers, der abhängig von der Amplitude des Farbsynchronsignals gesteuert wird, und in dem das Farbartsignal als Folge digitalisierter Abtastwerte in Dualdarstellung vorliegt.

In einem Farbfernsehempfänger wird das aus der Zwischenfrequenz demodulierte Gesamt-Farbbildsignalgemisch (FBAS) in das Helligkeitssignal und das Farbartsignal aufgespalten und getrennt weiterverarbeitet. Der Farbsignalverstärker muß automatisch gesteuert werden, damit die Farbinformation an der Bildröhre stets im richtigen Verhältnis zum Leuchtdichtesignal steht und nicht von der Abstimmung des Empfängers oder den Toleranzen der Empfängerschaltung abhängt. Da das Verhältnis von Farbartsignal zu Leuchtdichtesignal von dem jeweiligen Bildinhalt abhängt, wird die Einstellung des Farbartsignalverstärkers abhängig von der Amplitude des Farbsynchronsignals (Burst) gesteuert, weil dieses stets ein efiniertes Verhältnis zum Leuchtdichtesignal hat. Der notwendige Regelumfang des Farbartsignalverstärkers ergibt sich aus den Toleranzen der gesamten Übertragungsstrecke von der Bildaufnahme bis zum Farbfernsehempfänger, wobei besonders durch die Tatsache, daß das trägerfrequent übertragene Farbartsignal bei den heute üblichen Empfängerkonzepten an der Bandgrene des Zwischenfrequenzfilters liegt, die Amplitude sehr stark durch eine geringe Verstimmung des Empfängers beeinflußt wird. Unter Berücksichtigung einer gewissen Übersteuerungsreserve ergibt sich damit ein gesamter notwendiger Einstellbereich von etwa 24 dB.

Bei bisher üblichen Fernsehempfängern erfolgt, wie beispielsweise in der Zeitschrift "VALVO Mitteilungen" 63, April, beschrieben, die Einstellung des Farbsignalverstärkers, indem von der Amplitude des Farbsynchronsignals am Ausgang des Verstärkers eine Spannung zur Einstellung des Verstärkers abgeleitet wird. Dadurch entsteht eine geschlossene Regelschleife, die den Wert des Farbsynchronsignals am Ausgang des Verstärkers möglichst konstant hält. Eine solche Regelung ist jedoch schwierig zu optimieren und hat die bekannten Probleme geschlossener Regelschleifen.

In der Zeitschrift "Elektronik" 1981, Heft 16, ist auf den Seiten 27 bis 35 ein Fernsehempfängerkonzept beschrieben, das zu einem wesentlichen Teil digital arbeitet. Darin sind jedoch über die Einstellung des Farbartsignalverstärkers nur kurze Andeutungen enthalten, aus denen hervorgeht, daß auch bei diesem Konzept eine geschlossene Regelschleife zur Einstellung des Farbartsignalverstärkers verwendet wird.

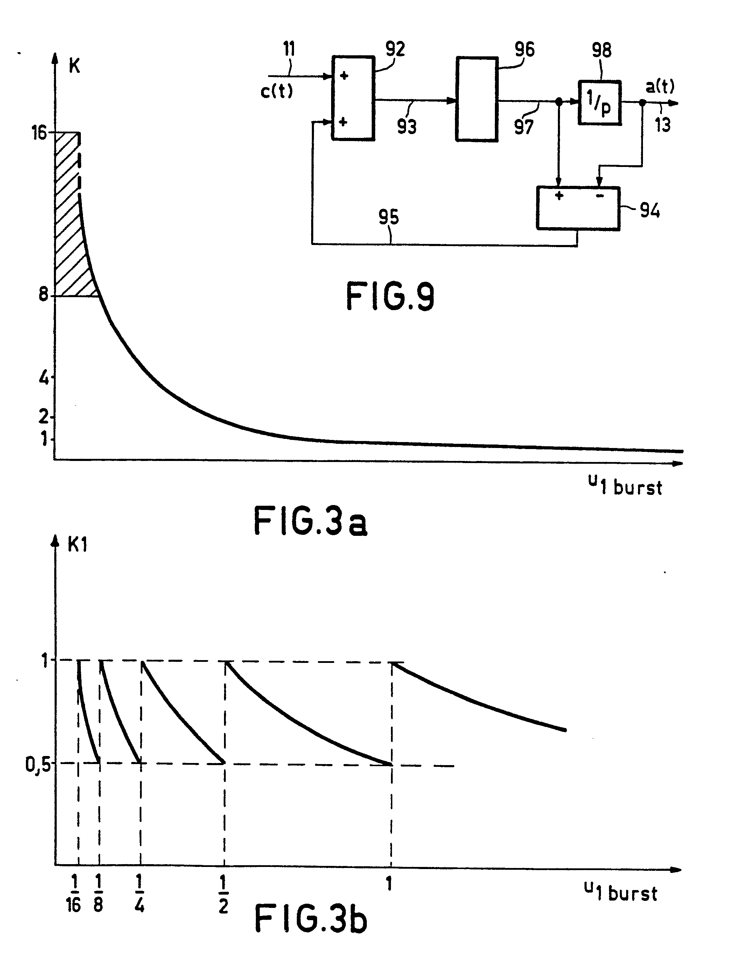

Aus "Electronics International", Band 54, Nr. 16 vom 11. August 1981, Seiten 97 bis 103, insbesondere Seite 99, rechte Spalte, Zeilen 15 bis 19, sowie Fig. 3 mit der zugehörigen Beschreibung auf der Seite 99, linke Spalte unten, ist eine Schaltungsanordnung zur Verarbeitung eines digitalisierten Fernsehsignals bekannt, bei der in einer mit "Automatic Colour Control" bezeichneten Baugruppe das Chrominanzsignal amplitudengeregelt (amplitude-controlled) wird. Um dies zu erreichen, wird die Amplitude des Burst-Signals auf einem vorgegebenen Pegel gehalten, wodurch eine konstante Farbsättigung unabhängig von Variationen in den Zwischenfrequenzfiltern erreicht werden soll.

Aus dem gleichen Aufsatz, Seite 99, linke Spalte, vorletzter und letzter Absatz ist weiterhin bekannt, das digitalisierte Videosignal in einem Videoprozessor (Fig. 3 der Entgegenhaltung) in Filtern nach Luminanz-Signal und Chrominanz-Signal zu trennen. Dabei kommen digitale Filtertechniken zur Anwendung, die den Schlüssel zur Einsparung vieler Spulen und Kondensatoren der herkömmlichen Fernsehgeräte bilden sollen. Die digitalen Filter sollen dabei mit einer Taktfrequenz von bis zu 18 MHz getaktet werden und enthalten Verzögerungskreise, Addierschaltungen und Multiplizierer.

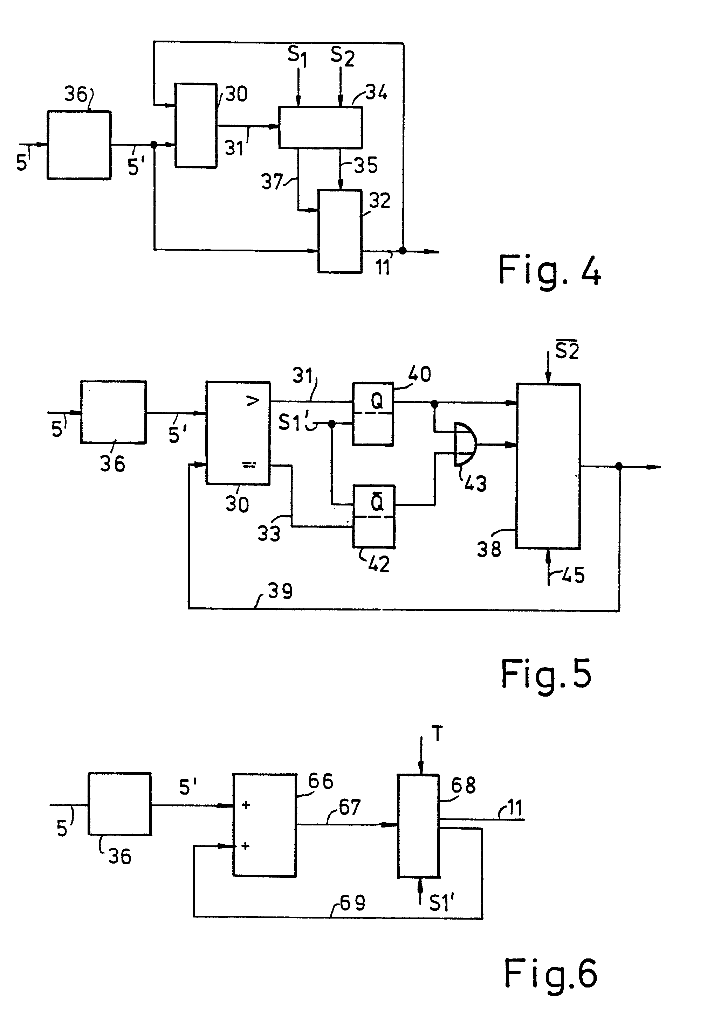

Weiterhin wird auf Seite 99 des "Electronics International" - Aufsatzes, linke Spalte unten und rechte Spalte oben ausgeführt, daß zur Vereinfachung der recht aufwendigen Multiplizierer Schaltungsanordnungen gemäß der dortigen Figur 4 (Seite 100) eingesetzt werden. Die Schaltung nach Fig. 4 stellt einen sogenannten "Shift-and-Add-Circuit" dar. In einer derartigen Schaltung wird eine Multiplikation in der Weise vorgenommen, wie dies beim handschriftlichen Rechnen ausgeführt wird. Dazu wird einer der Faktoren mit jeweils einer Stelle des zweiten Faktors multipliziert und das so gebildete Zwischenprodukt zum ersten Faktor addiert. Da im vorliegenden Fall binär codierte Zahlen multipliziert werden, reduziert sich die Multiplikation auf eine solche mit dem Faktor 1 oder 0. Die Multiplikation führt dann entweder auf 0 oder auf eine Zahl, die dem ersten Faktor entspricht, jedoch diesem gegenüber um eine bestimmte Anzahl von Stellen verschoßen ist, die durch die Stellung der Stelle im zweiten Faktor bestimmt wird, mit der gerade multipliziert werden soll. Bei der Verknüpfung von Binärzahlen wird dann die Multiplikation der beiden Faktoren aufgelöst in eine Anzahl von Additionen des zweiten, verschobenen Faktors mit dem ersten Faktor, wobei die Anzahl dieser Additionen der Anzahl der Stellen des zweiten Faktors entspricht, mindestens aber der Anzahl derjenigen Stellen im zweiten Faktor, die mit einer 1 belegt sind.

Eine solche Schaltungsanordnung, speziell für eine serielle Datenverarbeitung ausgelegt, ist in Fig. 4 des "Electronics International"-Aufsatzes dargestellt. Die mit "Z-2" usw. bezeichneten Stufen stellen Verzögerungsleitungen dar, beispielsweise Schieberegister, in denen der seriell dargestellte erste Faktor um bestimmte Anzahlen von Stellen verschoben wird. Die in Fig. 4 dargestellte Schaltungsanordnung ist also speziell für die Multiplikation eines variablen ersten Faktors mit einem fest vorgegebenen zweiten Faktor ausgelegt.

Eine derartige Schaltungsanordnung kann jedoch von vornherein nicht die Aufgabe erfüllen, das Farbartsignal zum Zwecke der Amplitudenregelung mit einem sich ständig ändernden, von den Empfangsbedingungen abhängigen Faktor zu multiplizieren.

2

Aufgabe der Erfindung ist es, eine Schaltungsanordnung der eingangs genannten Art anzugeben, bei der mit wenig Aufwand eine genaue und stabile Einstellung eines festen Verhältnisses zwischen Farbartsignal und Leuchtdichtesignal erreicht wird.

Diese Aufgabe wird erfindungsgemäß dadurch gelöst, daß das Farbartsignal in dem einstellbaren Verstärker eine Shift-Stufe, in der jeder Abtastwert um eine steuerbare ganze Anzahl Stellen verschiebbar ist, und einen Multiplizierer durchläuft, daß ein Amplitudendetektor die Amplitude des vor dem einstellbaren Verstärker vorhandenen Farbsynchronsignals (Burst) als digitalen Amplitudenwert ermittelt und daß eine Steuerschaltung aus dem Quotienten eines vorgegebenen Wertes und diesem Amplitudenwert ein Schiebesteuersignal für die Shift-Stufe, das die Anzahl der Stellen bestimmt, um die jeder Abtastwert verschoben wird, und für den Multiplizierer den Multiplikator, mit dem die stellenverschobenen Abtastwerte multipliziert werden, erzeugt. Statt der bekannten Regelschleife wird erfindungsgemäß also eine Vorwärtsregelung angewendet, die deswegen möglich ist, da die digitale Verstärkung absolut exakt und toleranzfrei erfolgt. Die erfindungsgemäße Aufteilung der digitalen Verstärkung in eine Multiplikation mit ganzen Potenzen von 2, denn dies ist die Wirkung der Stellenverschiebung in der Shift-Stufe, und eine nachfolgende Multiplikation der stellenverschobenen Werte ergibt eine sehr gute Ausnutzung des Multiplizierers, da dieser nur signifikante Stellen verarbeitet und somit auf eine minimale Anzahl von Stellen ausgelegt werden kann.

Da die Shift-Stufe eine Multiplikation mit ganzen Potenzen von 2 durchführt, ist es zweckmäßig, daß das Verhältnis des von der Steuerschaltung bei verschiedenen Größen des digitalen Amplitudenwertes erzeugten maximalen und minimalen Multiplikators $k_1$ höchstens gleich 2 ist, wobei vorzugsweise $0,5 \leqslant k_1 < 1$ ist.

Für die Ausbildung des Amplitudendetektors sind verschiedene Möglichkeiten vorhanden. Vorteilhaft ist es, wenn der Amplitudendetektor einen Betragsbildner, einen digitalen Vergleicher und ein Speicherregister für einen digitalen Abtastwert des Farbartsignals enthält, daß der eine Eingang des Vergleichers und der Eingang des Speicherregisters mit dem Ausgang des Betragsbildners verbunden sind, daß der andere Eingang des Vergleichers mit dem Ausgang des Speicherregisters, der den Amplitudenwert liefert, verbunden ist, daß der Vergleicher ein Ausgangssignal erzeugt, wenn das Ausgangssignal des Betragsbildners größer ist als das Ausgangssignal des Speicherregisters, und daß eine Steuerstufe den Inhalt des Speicherregisters mindestens vor jedem neuen Farbsynchronsignal löscht und nur während der Dauer des Farbsynchronsignals bei einem Ausgangssignal des Vergleichers das Einspeichern eines neu zugeführten Abtastwertes in das Speicherregister freigibt. Dies ergibt eine Ausführung, die mit geringem Aufwand für hohe Geschwindigkeiten aufgebaut werden kann, denn die Folge der Abtastwerte tritt mit einer Frequenz auf, die zur Erfüllung des Abtasttheorems genügend über der doppelten Frequenz des Farbsynchronsignals von etwa 4,4 MHz liegt, insbesondere das Vierfahe dieser Frequenz beträgt. Der Betragsbildner kann dabei, wenn die Abtastwerte bei negativen Werten im Zweierkomplement dargestellt werden, leicht durch Exklusiv- ODER-Schaltungen realisiert werden.

Eine andere Ausführung des Amplitudendetektors ist dadurch gekennzeichnet, daß der Amplitudendetektor einen Betragsbildner, einen Vergleicher und einen Vor-Rück-Zähler enthält, daß der Vergleicher das Ausgangssignal des Zählers mit allen während einer Farbsynchronsignalperiode zugeführten Abtastwerten vergleicht und dem Zähler einen Zähltakt zuführt, wobei das Vergleichsergebnis die Zählrichtung steuert, wenn nicht der höchste der in einer Farbsynchronsignalperiode zugeführte Abtastwert gerade gleich dem Ausgangssignal des Zählers ist, und daß nur die höchsten Stellen des Zählers den Amplitudenwert liefern. Eine Veränderung der Abtastwerte des Farbsynchronsignals wirkt sich also jeweils nur in einem Schritt des Zählers in Richtung der Veränderung aus, so daß sowohl durch diese Tatsache als auch insbesondere dadurch, daß nur die höchsten Stellen des Zählers ausgewertet werden, eine wirksame Tiefpaßfilterung entsteht. Auch hier wirkt sich nur der in jeder Farbsynchronsignalperiode höchste Abtastwert aus, so daß beide angegebenen Amplitudendetektoren Spitzenwertdetektoren sind.

Eine andere Ausfürung des Amplitudendetektors, bei dem der Mittelwert der Amplitudenwerte jeweils eines Farbsynchronsignals gewonnen wird, ist dadurch gekennzeichnet, daß der Amplitudendetektor einen Betragsbildner, eine Recheneinheit und ein Speicherregister enthält, daß die Recheneinheit aufeinanderfolgende Abtastwerte während der Dauer des Farbsynchronsignals jeweils zum Inhalt des vorher auf Null gesetzten Speicherregisters addiert und daß nach dem Ende des Farbsynchronsignals der Inhalt der höchsten Stellen des Speicherregisters den Amplituden wert darstellt.

Bei diesen Ausführungen des Amplitudendetektors wird davon ausgegangen, daß die Abtastwerte bei definierten Phasenwinkeln von dem Farbsynchronsignal gewonnen werden, d.h. daß das Taktsignal zum Gewinnen der Abtastwerte mit dem Farbsynchronsignal phasenverkoppelt ist. Eine andere Ausführung des Amplitudendetektors, der diese Bedingung nicht benötigt, ist gemäß einer weiteren Ausgestaltung der Erfindung dadurch gekennzeichnet, daß die digitalisierten Abtastwerte eine digitale Quadrierschaltung durchlaufen, daß ein an deren Ausgang über ein digitales Tiefpaßfilter mit einer Grenzfrequenz kleiner als die doppelte Frequenz des Farbsynchronsignals angeschlossener Akkumulator eine vorgegebene Anzahl quadrierter gefilteter Abtastwerte aufsummiert und daß ein der vorgegebenen Anzahl entsprechender Bruchteil des im Akkumulator aufsummierten Wertes der Steuerschaltung zugeführt wird. Wie leicht nachzuweisen ist, entsteht beim Quadrieren eines Signals eine Gleichspannung mit einer überlagerten Wechselspannung von der doppelten Frequenz des zu quadrierenden Signals, wobei der letztere Anteil durch das Tiefpaßfilter leicht beseitigt werden kann. Bei der Aufsummierung, wobei von der Summe nur ein Bruchteil weiterverarbeitet wird, entsteht ein Mittelwert, so daß der schließlich gewonnene digitale Amplitudenwert unabhängig von der Lage der Abtastpunkte zum Farbsynchronsignal ist.

3

Eine digitale Quadrierschaltung bedeutet jedoch einen zusätzlichen Aufwand. Dieser zusätzliche Aufwand läßt sich jedoch leicht dadurch vermeiden, daß gemäß einer weiteren Ausgestaltung der Erfindung die Quadrierschaltung der Multiplizierer ist und drei Umschalter vorgesehen sind, die während des Farbsynchronsignals betätigt werden und von denen der erste Umschalter den Multiplikatoreingang des Multiplizierers vom Ausgang der Steuerschaltung auf den Multiplikandeneingang umschaltet, der zweite Umschalter den Ausgang des Multiplizierers von dem Ausgang des einstellbaren Verstärkers auf den Eingang des Tiefpaßfilters umschalter und der dritte Umschalter den Steuereingang der Shift-Stufe vom Ausgang der Steuerschaltung auf ein festes Steuersignal umschaltet. Während des Farbsynchronsignals sind nämlich keine Farbartsignale vorhanden, die verstärkt werden müssen, da die Farbsynchronsignale während des horizontalen Rücklaufs des Strahls auf dem Bildschirm auftreten, so daß zu diesem Zeitpunkt der Multiplizierer nicht benötigt wird. Dadurch sind also nur die Umschalter zusätzlich notwendig.

Die vorstehend beschriebenen Amplitudendetektoren können nun auch dazu verwendet werden, u.a. das Farbartsignal besonders bei niedrigen Pegeln noch genauer zu steuern, indem der dabei immer stärker werdende Einfluß von Rauschund anderen Störsignalen berücksichtigt wird. Es ist daher zweckmäßig, daß das Ausgangssignal des Amplitudendetektors in einem bildinformationsfreien Zeitabschnitt, insbesondere während mindestens eines Teils der Vertikal-Austastlücke, bei Überschreiten vorgegebener Schwellwerte nacheinander zunächst die Durchlaßkurve des dem einstellbaren Verstärker vorgeschalteten Farbartsignalfilters auf kleinere Bandbreite umschaltet und schließlich das Farbartsignal abschaltet. Auf diese Weise wird der Amplitudendetektor praktisch ohne zusätzlichen Aufwand mehrfach ausgenutzt, nämlich auch zur Bestimmung der Rauschamplitude, die bei genügender Größe, d.h. bei einem schwachen Eingangssignal, dem Farbsynchronsignal überlagert ist und daher dessen Amplitude größer als tatsächlich vorhanden erscheinen läßt. Daher wird bei Überschreiten einer bestimmten Rauschsignalamplitude die Verstärkung des Farbartsignals auf Null geschaltet, indem insbesondere im Farbdecoder das Farbsignal ganz abgeschaltet wird.

Da die Steuerschaltung das Schiebesteuersignal und den Multiplikator aus dem Quotienten eines vorgegebenen Wertes und dem digitalen Amplitudenwert erzeugt, ist es zweckmäßig, daß die Steuerschaltung einen Dividierer enthält, der den vorgegebenen Wert durch den Amplitudenwert dividiert. Dabei ergibt sich der Multiplikator bis auf eine Stellenverschiebung direkt, wobei sich die Stellenverschiebung aus der Stellung des signifikantesten Bits des Quotienten ergibt und diese Stellenverschiebung gleichzeitig das Steuersignal angibt. Dividierschaltungen Zur Division zweier digitaler Werte sind bekannt und brauchen hier nicht näher beschrieben zu werden.

Derartige Dividierschaltungen stellen jedoch einen gewissen Aufwand dar. Eine einfachere Lösung ist dadurch gekennzeichnet, daß der Dividierer durch einen Festwertspeicher gebildet ist, dessen Adressensignal von dem digitalen Amplitudenwert abgeleitet sind und der an jeder Adresse das dieser Amplitude zugehörige Steuersignal und den zugehörigen Multiplikator enthält. Derartige Festwertspeicher sind einfache und preiswerte Elemente. Falls bei handelsüblichen Festwertspeichern die Wortbreite nicht ausreicht, ist es zweckmäßig, daß der Festwertspeicher in mehrere Teilspeicher aufgeteilt ist, von denen einige Teilspeicher das Steuersignal und andere Teilspeicher den Multiplikator enthalten, wobei alle Teilspeicher parallel adressiert werden. Im allgemeinen ist die Aufteilung in nur zwei Festwertspeichern ausreichend. Diese Lösung ist allgemein preiswerter als die Verwendung eines speziellen Festwertspeichers mit größerer Wortbreite.

Im einfachsten Fall wird davon ausgegangen, daß der vorgegebene Wert ein fester Wert ist. Dies ergibt bei der Verwendung von Festwertspeichern eine einfache Adressierung. Eine vorteilhafte Ausgestaltung besteht jedoch auch darin, daß der vorgegebene Wert insbesondere zur Einstellung der Farbsättigung einstellbar ist. Auf diese Weise erfordert die Einstellung der Farbsättigung keinen wesentlichen zusätzlichen Aufwand. Bei Verwendung von Festwertspeichern in der Steuerschaltung, wie oben beschrieben, ist es zweckmäßig, daß der einstellbare Wert mit Hilfe einer Recheneinheit den Amplitudenwert verschiebt und der verschobene Amplitudenwert die Adresse des bzw. der Festwertspeicher darstellt. Diese Verschiebung kann besonders einfach dadurch erfolgen, daß der vorgegebene Wert zu dem Amplitudenwert addiert wird. Bei Verwendung eines Dividierers in der Steuerschaltung kann ein einstellbarer Wert direkt verarbeitet werden.

Eine andere Lösung für die Steuerschaltung, die auch einen einstellbaren Wert ohne weiteres verarbeiten kann, besteht darin, daß die Steuerschaltung einen Mikroprozessor enthält, der den Dividierer realisiert und jeweils zwischen zwei oder mehreren Farbsynchronsignalen das Steuersignal und den Multiplikator erzeugt. Dieser Mikroprozessor führt dann die Division des vorgegebenen, gegebenenfalls einstellbaren Wertes durch den bzw. durch einen aus einer Anzahl aufeinanderfolgender Amplitudenwerte abgeleiteten Wert während der Dauer einer bzw. mehrerer Zeilen durch, an deren Anfang der digitale Amplitudenwert ermittelt worden ist, und erzeugt das Steuersignal und den Multiplikator für die darauffolgende Zeile bzw. Zeilen. Diese Verschiebung um eine oder mehrere Zeilen ist normalerweise ohne Bedeutung, da über eine kleine Anzahl von Zeilen in der Praxis keine wesentliche Änderung der Amplitude des Farbsynchronsignals auftritt, da alle übrigen Parameter sich während der Dauer einiger Zeilen praktisch nicht ändern.

Für den Fall, daß sich bei sehr schwachen Signalen das Farbsynchronsignal beispielsweise durch ein überlagertes Rauschen von einer Zeile zur anderen wesentlich ändert, ist es zweckmäßig, daß dem Amplitudendetektor ein digitaler Tiefpaß nachgeschaltet ist, wenn dieser nicht bereits im Amplitudendetektor funktionell enthalten ist. Da es sich bei dem digitalen Amplitudenwert am Ausgang des Amplitudendetektors um einen digitalen Wert handelt, ist es zweckmäßig, daß der Tiefpaß als digitales rekursives Filter erster Ordnung mit einem Speicherregister für einen Abtastwert und einem Addierer/Subtrahierer ausgebildet ist, der den Eingangs-Abtastwert zu dem Inhalt des Speicherregisters addiert und einen vorgegebenen Bruchteil des Inhalts des Speicherregisters, der auch den Ausgangswert des Tiefpasses darstellt, davon subtrahiert und das Ergebnis nach dem Ende des Farbsynchronsignals in das Speicherregister einschreibt. Ein derartiges Digitalfilter ist einfach aufgebaut und vermeidet zuverlässig, daß ein beispielsweise durch Rauschen oder andere Störsignale beeinflußtes Farbsynchronsignal eine einzelne Zeile gegenüber benachbarten Zeilen stark beeinflußt.

Bei Verwendung eines Mikroprozessors als Steuerschaltung ist es zweckmäßig, daß der Mikroprozessor die Ausgangssignale des Amplitudendetektors erhält und vor Bestimmung des Steuersignals und des Multiplikators mit einer Anzahl vorhergehender Amplitudenwerte eine Tiefpaßfilterung durchführt. Für eine solche Tiefpaßfilterung bestehen viele Möglichkeiten, die sich durch Nachbildung der bekannten digitalen Tiefpässe ergeben. Besonders zweckmäßig ist es, daß der Mikroprozessor eine rekursive Tiefpaßfilterung der Amplitudenwerte entsprechend dem vorher beschriebenen Tiefpaß durchführt. Hierfür ist nur eine einfache Berechnung erforderlich, die von dem Mikroprozessor innerhalb der zur Verfügung stehenden Dauer einer bzw. mehrerer Zeilen ohne weiteres durchgeführt werden kann.

Besonders wenn der Mikroprozessor nur jeweils nach mehreren Zeilen ein neues Steuersignal für die Shift-Stufe und einen neuen Multiplikator ermittelt, können noch weitere Funktionen übernommen werden, die mit den bisher beschriebenen Funktionen vorzugsweise zeitverschachtelt durchgeführt werden können. Insbesondere ist es zweckmäßig, daß der Mikroprozessor die Bestimmung des Amplitudenwertes durchführt, indem mindestens eine Anzahl Abtastwerte des Farbsynchronsignals zwischengespeichert und mit niedrigerer Frequenz ausgelesen und dem Mikroprozessor zugeführt und entsprechend einem der beschriebenen Amplitudendetektoren verarbeitet werden. In diesem Falle können also Amplitudendetektor, Tiefpaßfilter und Steuerschaltung durch nur einen Mikroprozessor realisiert werden, so daß sich eine preisgünstige Ausführung ergibt.

Ausführungsbeispiele der Erfindung werden nachstehend anhand der Zeichnung näher erläutert. Es zeigen

Fig. 1 ein Blockschaltbild einer erfindungsgemäßen Schaltungsanordnung,

Fig. 2 ein Diagramm zur Erläuterung der Lage der Abtastwerte sowie einiger Steuersignale zum Farbsynchronsignal,

Fig. 3a und b ein Diagramm zur Erläuterung der Aufteilung der Multiplikation in eine Stellenverschiebung und eine stellenbegrenzte Multiplikation,

Fig. 4 bis 7 einige verschiedene Ausführungsformen des Amplitudendetektors,

Fig. 8 eine Ausführung der Steuerschaltung mit Festwertspeichern,

Fig. 9 eine Ausführungsform eines Tiefpaßfilters, das dem Amplitudendetektor nachgeschaltet ist.

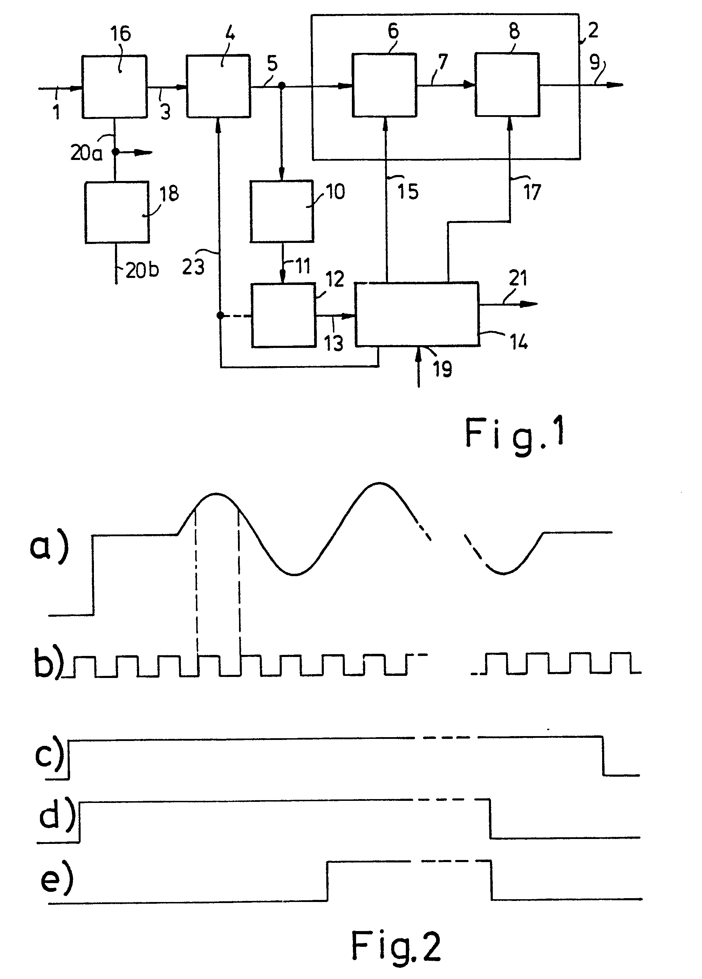

In Fig. 1 wird das von der Zwischenfrequenz demodulierte Gesamt-Farbbildsignalgemisch über den Eingang 1 einem Analog-Digital-Wandler 16 zugeführt, der von einer Synchronisierschaltung 18 über die Leitung 20a gesteuert wird. In der Synchronisierschaltung 18 werden dazu ein mit dem Farbsynchronsignal phasenverkoppeltes Taktsignal sowie weitere Steuersignale erzeugt. Diese sind in Fig. 2 näher angegeben. Darin ist in der Zeile a) der Verlauf des dem Eingang 1 zugeführten analogen Signals nach einem Horizontal-Synchronimpuls dargestellt, dessen Ende mit der positiven Flanke in Fig. 2 zu Beginn dargestellt ist. Eine gewisse Zeit nach dieser positiven Flanke, die hier nicht maßstabsgerecht dargestellt ist, beginnt das sinusförmige Farbssynchronsignal mit der Farbträgerfrequenz, von dem hier nur der Anfang und das Ende dargestellt ist. Zu diesem Farbsynchronsignal wird ein damit phasenverkoppeltes Taktsignal mit exakt der vierfachen Farbträgerfrequenz, d.h. mit etwa 17,7 MHz, erzeugt, das in der Zeile b) dargestellt ist. Dabei wird angenommen, daß das Taktsignal bereits mit einem früheren Farbsynchronsignal synchronisiert wurde und eine hohe Frequenzkonstanz hat, so daß es bei jedem neuen Farbsynchronsignal zu Beginn einer neuen Zeile nur wenig nachgeregelt werden muß. Dabei erfolgt die Nachregelung derart, daß die eine Flanke des symmetrischen Taktsignals mit den Nulldurchgängen bzw. Extremwerten des Farbsynchronsignals zusammenfällt, so daß die andere Taktsignalflanke bei 45°, 135° usw. des Farbsynchronsignals liegt. Mit dieser letzteren Taktflanke wird das Signal in dem Analog-Digital-Wandler 16 abgetastet. Das auf der Leitung 2a erzeugte Taktsignal wird noch weiteren Stufen zugeführt.

Ferner wird in der Synchronisierschaltung 18 ein Farbsynchronsignal-Austastimpuls BA erzeugt, der in der Zeile c) in Fig. 2 dargestellt ist. Dieser BA-Impuls beginnt vor dem Farbsynchronsignal und endet erst nach dessen Ende. Aus diesem BA-Impuls wird ferner ein S1-Impuls erzeugt, der mit dem Taktsignal synchronisiert ist und vor dem Ende des Farbsynchronsignals endet, wie in der Zeile d) der Fig. 2 dargestellt ist, beispielsweise durch Abzählen einer vorgegebenen Anzahl von Taktimpulsen. Ferner wird ein S2-Impuls erzeugt, der in der Zeile e) dargestellt ist und eine vorgegebene Anzahl von Taktimpulsen nach dem Beginn des S1-Impulses beginnt und mit diesem endet. An den Flanken dieser beiden Impulse werden noch weitere kurze Steuerimpulse erzeugt, die vorzugsweise kürzer als eine Periode des Taktsignals sind und mit S1' - und S2' - Impulse bezeichnet werden. Ferner wird ein vertikaler Austastimpuls VA sowie weitere Steuerimpulse erzeugt, wie bei analog aufgebauten Fernsehern bekannt ist, so daß diese Steuerimpulse hier nicht weiter erläutert werden. Diese Steuerimpulse werden aus der Synchronisierschaltung 18 über je eine Leitung herausgeführt, wobei alle Leitungen hier vereinfacht als eine Leitung 20b dargestellt sind.

Die den Ausgang des Analog-Digital-Wandlers 16 bildende Leitung führt außer beispielsweise auf den Leuchtdichtekanal, der hier nicht weiter dargestellt ist, auf ein Farbartsignalfilter 4, das nur das Farbartsignal durchläßt und auf der Leitung 5 abgibt. Das Farbartsignalfilter 4 ist hier über Steuersignale auf der Leitung 23 in der Bandbreite umschaltbar. Die Leitungen 3 und 5 sowie weitere Leitungen in dieser und in den folgenden Figuren führen jeweils mehrstellige Dualworte, so daß diese Leitungen tatsächlich aus einer Anzahl paralleler einzelner Leitungen bestehen und hier nur vereinfacht als eine Verbindung dargestellt sind.

Die Leitung 5 führt auf einen Verstärker 2, dessen Verstärkung über die Mehrfachleitungen 15 und 17 eingestellt wird. Die Einstellbarkeit des Verstärkers 2 ist deswegen notwendig, damit die Farbinformation an der Bildröhre stets im richtigen Verhältnis zum Leuchtdichtesignal steht. Das trägerfrequent übertragene Farbartsignal (4,4 MHz und Seitenbänder) liegt bei den heute üblichen Empfängerkonzepten an der Bandgrenze des ZF-Filters. Die Lage des Farbträgers auf der Flanke des ZF-Bandpasses bedingt, daß erhebliche Amplitudenänderungen des Farbartsignals in Abhängigkeit von der Empfängerabstimmung auftreten. Weiterhin sind noch Pegelunterschiede durch (Filter-) Streuungen in der Serienfertigung und Antennenfehlanpassung zu berücksichtigen. Der notwendige Regelumfang ergibt sich aus den Toleranzen der gesamten Übertragungsstrecke Videoquelle - Sender - Farbempfänger:

| Farbträgerdämpfung: | $A_{nominal}$ | $A_{max}$ |
|---|---|---|
| Modulator/Sender(HF) | -0,5...1,0 dB | ca. 2 dB |
| Empfänger(HF-ZF-Selektion) | 3...6 dB | |
| Abstimmung/Feinverstimmung | 0...16 dB | 16 dB |
| -500 kHz $<$ f $<$ +300 kHz) | | |
| HF/ZF insgesamt | | 16 dB |
| Übersteuerungsreserve | | 6 dB |
| | | 24 dB |

Es ist also notwendig, einen Regelhub von mindestens 24 dB zu realisieren, um eine konstante Farbsättigung
1. beim Empfang verschiedener Sender und
2. bei Verstimmung des Farbfernseh-Empfängers zu gewährleisten.

Als Stellgröße für die Einstellung der Verstärkung wird die Amplitude des Farbsynchronsignals (Burst) benutzt, da diese in einem festen Verhältnis zur Farbsättigung steht. Diese Amplitude des Farbsyncronsignals wird in Fig. 1 in dem Amplitudendetektor 10 ermittelt, bei dem durch ein schaltsignal im Bereich des Farbsynchronsignals zu Beginn ein fester Wert eingestellt und am Ende des Farbsynchronsignals der festgestellte Amplitudenwert über die Leitung 11 abgegeben wird. Diese führt auf einen Tiefpaß 12, der prinzipiell nicht notwendig ist, jedoch verhindert, daß ein durch Störsignale gestörtes Farbsynchronsignal einen falschen Amplitudenwert vortäuscht und damit eine unzulässige Änderung der Farbsättigung hervorruft. Der Tiefpaß kann auch in den Amplitudendetektor funktionell einbezogen werden, wie später erläutert wird.

Das Ausgangssignal des Tiefpasses 12 führt über die Leitung 13 auf die Steuerschaltung 14, die insbesondere die Signale auf den Leitungen 15 und 17 zur Verstärkungssteuerung liefert. Die erforderliche Gesamtverstärkung k des Verstärkers 2 ergibt sich aus

$$k = \frac{u_{2soll}}{u_{1burst}} ,$$

wobei $U_{2soll}$ das Ausgangssignal des Verstärkers 2 bei der Normamplitude des Farbsynchronsignals und $u_{1burst}$ die tatsächlich vorhandene Amplitude des Farbsynchronsignals ist. Dies ergibt eine einfache Vorwärtsregelung durch die Amplitude des Farbsynchronsignals.

Für die technische Realisierung ist es zweckmäßig, den Verstärkungsfaktor k in Mantisse und Exponent auf der Basis von Zweierpotenzen aufzuteilen

$$k = k_1 \cdot 2^n,$$

wobei der Wertebereich für $k_1$ auf $0,5 \leqslant k_1 < 1$ eingeschränkt ist.

Dieses Prinzip der Gleitkommadarstellung erlaubt die Aufteilung in eine Schiebe-Operation und eine Multiplikation mit fester Wortbreite.

Die Vorteile dieser Aufteilung sollen anhand der Fig. 3 näher erläutert werden. In Fig. 3a ist die erforderliche Verstärkung k in Abhängigkeit von dem Eingangssignal $u_1$ angegeben. In dem schraffierten Bereich ergeben sich starke Qantisierungseffekte. Bezogen beispielsweise auf ein System mit einer Wortbreite von 8 Bit ist ein für die digitale Verstärkung erforderlicher Multiplizierer bereits bei einer Verstärkung von k = 4 nur zu 5/8 ausgenutzt und bei einer Verstärkung k = 16 nur zu 3/8. Bei der Gleitkommadarstellung gemäß Fig. 3b liegt wie vorher erwähnt der Wertebereich für $k_1$ zwischen 0,5 und 1, d.h. der Multiplizierer wird in seiner vollen Wortbreite optimal ausgenutzt. Da durch das dem Verstärker vorgeschaltete Farbartsignalfilter 4 besonders in einer schmalbandigen Einstellung infolge einer im Amplitudendetektor festgestellten großen Rauschamplitude eine Vergrößerung der Wortbreite auf nahezu 11 gültige Bit erfolgt, ist selbst bei stark reduziertem Eingangssignal, bei dem die Shift-Stufe 6 die maximale Stellenverschiebung von 5 Bitstellen vernimmt, eine ausreichend gute Auflösung gewährleistet. Bei einer Festkommadarstellung würde eine Multiplikation mit 8 x 8 nicht ausreichen, sondern für eine bezogen auf die Gleitkommadarstellung gleiche Auflösung wäre eine Multiplikation mit 10 x 12 Bit notwendig.

Das Gleitkommasystem weist also folgende Vorteile auf:
- großer Regelhub bei guter Auflösung erzielbar
- einfache Hardware-Realisierung in (binären) digitalen Systemen
- optimale Ausnutzung eines vorgegebenen Multiplizierers mit beschränkter Wortbreite für die Funktion $k_1$ x

**0 074 682**

$u_1$;
- frei wählbarer Dynamikbereich, d.h. bei einem Shift bis n = 5 eine 32-fache Verstärkung.

Für die Realisierung der Verstärkung durch Multiplikation in Gleitkommadarstellung ist in Fig. 1 der Verstärker 2 mit einer Shift-Stufe 6 und einem Multiplizierer 8 versehen, die hintereinander geschaltet sind. Die Steuerschaltung 14 muß daher für beide Stufen getrennte Ansteuersignale erzeugen, d.h. auf der Vielfachleitung 15 ein Steuersignal, das die Anzahl der Stellenverschiebungen in der Shift-Stufe 6 angibt, und auf der Mehrfachleitung 17 den Multiplikator für den Multiplizierer 8. Wenn die Steuerschaltung 14 einen Dividierer enthält, der den über die Leitung 19 vorgegebenen Wert $u_{2soll}$ durch den über die Leitung 13 zugeführten Amplitudenwert dividiert, muß der Quotient lediglich in eine halblogarithmische Darstellung in Kennzahl und Restzahl umgewandelt werden, wobei die Restzahl den Multiplikator und die Kennzahl die Anzahl der zu verschiebenden Stellen angibt. Eine derartige Schaltung ist beispielsweise aus der DE-OS-2 312 128 bekannt. Das auf diese Weise stellenverschobene und multiplizierte Signal wird am Ausgang 9 des Verstärkers 2 abgegeben und der Farbdekoderschaltung zugeführt.

Der Amplitudendetektor 10 kann auch dazu benutzt werden, den Rausch- bzw. Störsignalanteil des Signals am durch die Leitung 5 gebildeten Ausgang des Farbartsignalfilters 4 zu bestimmen, indem die Amplitude dieses Signals in einem bildinformationsfreien Zeitabschnitt, beispielsweise in der Vertikal-Austastlücke des Bildsignals bestimmt wird, denn das dann vorhandene Signal kann nur ein Rausch- oder Störsignal sein. Um dabei zu verhindern, daß beispielsweise durch ein einzelnes Störsignal eine zu große Rauschamplitude vorgetäuscht wird, werden mehrere aufeinanderfolgende Werte im Amplitudendetektor bestimmt und dem Tiefpaßfilter 12 zugeführt, an dessen Ausgang dann eine mittlere Störsignalamplitude erscheint. Abhängig von dieser Störsignalamplitude kann dann über die Leitung 23 das Farbartsignalfilter 4 während der folgenden Bildzeit bzw. Halbbildzeit so umgeschaltet werden, daß seine Bandbreite bei steigender Störsignalamplitude mindestens während der sichtbaren Bildzeit verringert und damit das Signal-Rausch-Verhältnis verbessert wird, da die Verringerung der Bandbreite des Farbartsignals weniger störend ist als starkes Rauschen im Farbartsignal. Die Umschaltung des Farbartsignalfilters 4 muß selbstverständlich vor der nächsten Bestimmung der Störsignalamplitude rückgängig gemacht werden, d.h. die größte Bandbreite muß wieder eingestellt werden, da bei einer kleineren Bandbreite eine zu kleine Störsignalamplitude ermittelt und dann für die nachfolgende Halbbildzeit das Farbartsignalfilter 4 fälschlich wieder zurückgeschaltet würde, wodurch ein ständiges Hin- und Herschalten erfolgen würde.

Das Signal zum Umschalten des Farbartsignalfilters 4 kann beispielsweise durch Vergleich der Störsignalamplitude mit unterschiedlichen Schwellweren in dem Tiefpaß 12 erzeugt und über den gestrichelt gezeichneten Ausgang der Leitung 23 zugeführt werden. In den meisten Fällen wird es jedoch einfacher sein, die Auswertung der Störsignalamplitude in der Steuerschaltung 14 durchzuführen und von dort die Signale zum Umschalten des Farbartsignalfilters 4 der Leitung 23 zuzuführen, wie in Fig. 1 dargestellt ist. Ferner ist auch eine Korrektur des anschließend bestimmten Amplitudenwertes mit der Störsignalamplitude in der Steuerschaltung 14 vor der Bestimmung des Steuersignals für die Shift-Stufe 6 und des Multiplikators für den Multiplizierer 8 möglich. Im Grenzfall bei zu großer Störsignalamplitude ist es zweckmäßig, das Farbartsignal beispielsweise im Farbdecoder über die Leitung 21 ganz abzuschalten oder den auf der Leitung 17 erzeugten Multiplikator auf Null zu stellen und somit die Verstärkung des Farbartsignals gleich Null zu machen. Dadurch wird ein sehr störendes Farbrauschen im wiedergegebenen Bild zuverlässig verhindert.

Eine einfache Realisierung eines Amplitudendetektors ist in Fig. 4 dargestellt. Von den über die Leitung 5 zugeführten gefilterten Abtastwerten des Farbartsignals werden in der Stufe 36 die Beträge gebildet. Dies entspricht im analogen Bereich einer Gleichrichtung. Bei Darstellung der Abtastwerte im Zweierkomplement kann die Betragsbildung einfach durch eine Exklusiv-ODER-Verknüpfung gebildet werden, die durch das Vorzeichenbit gesteuert wird. Die Betragswerte werden dann über die Leitung 5' dem einen Eingang eines Vergleichers 30 und dem Dateneingang eines Speicherregisters 32 zum Speichern eines Abtastwertes zugeführt. Die Ausgangsleitung 11 des Speicherregisters 32, die am Ende des Farbsynchronsignals dessen Amplitudenwert angibt, ist mit dem anderen Eingang des Vergleichers 30 verbunden. Wenn der vom Betragsbildner 36 gelieferte Wert größer ist als der vom Speicherregister 32 auf der Leitung 11 gelieferte Wert, erzeugt der Vergleicher 30 auf der Ausgangsleitung 31 ein Signal, das einer Logikstufe 34 zugeführt wird. Diese Logikstufe 34 erhält zwei Schaltsignale S1 und S2, die aus den Zeilensynchronisiersignalen gewonnen werden. Durch diese Signale wird über die Leitung 35 das Speicherregister vor dem Beginn des Farbsynchronimpulses gelöscht, und auf der Leitung 37 wird während der Dauer des Farbsynchronsignales bei jedem Ausgangssignal des Vergleichers 30 auf der Ausgangsleitung 31 ein Impuls erzeugt, der den gerade auf der Leitung 5' vorhandenen Betragswert des Farbsynchronsignals in das Speicherregister 32 einschreibt. Auf diese Weise enthält das Speicherregister 32 am Ende des Farbsynchronsignals den größten dazu aufgetretenen Abtastwert, der die maximale Amplitude des Farbsynchronsignals angibt.

Der in Fig. 5 dargestellte Amplitudendetektor enthält ebenfalls eine Stufe 36 zur Betragsbildung, deren Ausgangssignale dem einen Eingang eines Vergleichers 30 zugeführt werden. Der andere Eingang des Vergleichers 30 ist mit der Ausgangsleitung 39 eines Zählers 38 verbunden. Die Ausgangsleitung 31 des Vergleichers 30, die ein Signal führt, wenn der auf der Leitung 5' vorhandene Betragswert größer ist als der Ausgangsvert des Zählers 38, ist mit dem Setzeingang einer Speicherstufe 40 verbunden. Ein weiterer Ausgang 33 des Vergleichers 30, der ein Signal führt, wenn die beiden dem Vergleicher zugeführten Werte gleich sind, ist mit dem Setzeingang einer weiteren Speicherstufe 42 verbunden. Der im gesetzten Zustand ein Signal führende Ausgang Q der Speicherstufe 40 ist mit dem Steuereingang für die Zählrichtung des Zählers 38 und

7

mit dem einen Eingang eines ODER-Gliedes 43 verbunden, dessen anderer Eingang mit dem im rückgesetzten Zustand ein Signal führenden Ausgang $\bar{Q}$ der weiteren Speicherstufe 42 verbunden ist. Beide Speicherstufen werden zu Beginn des Farbsynchronsignals durch den vom S1-Impuls abgeleiteten S1'-Impuls rückgesetzt.

Die Funktion dieser Schaltung ist wie folgt. Wenn während der Dauer des Farbsynchronimpulses auch nur ein Abtastwert größer ist als die Stellung des Zählers 38, wird die Speicherstufe 40 gesetzt, so daß der Zähler 38 auf Aufwärtszählung geschaltet wird, und über das ODER-Glied 43 ist die Zählung freigegeben, so daß der Zähler 38 mit dem invertierten S2-Impuls am Ende des Farbsynchronsignals um einen Schritt aufwärts zählt. Dabei ist es ohne Bedeutung, ob mindestens ein anderer Abtastwert gleich der Stellung des Zählers 38 war und die weitere Speicherstufe 42 auch gesetzt wurde.

Wenn mindestens ein Abtastwert gleich der Stellung des Zählers 38 ist, aber kein Abtastwert größer, ist nur die weitere Speicherstufe 42 gesetzt, so daß das ODER-Glied 43 an keinem Eingang ein Signal erhält und das Weiterschalten des Zählers 38 sperrt.

Wenn dagegen alle Abtastwerte kleiner sind als die Stellung des Zählers 38, sind beide Speicherstufen 40 und 42 rückgesetzt geblieben. Durch diesen Zustand der Speicherstufe 40 wird der Zähler 38 auf Abwärtszählung geschaltet, und durch den gleichen Zustand der weiteren Speicherstufe 42 erhält das ODER-Glied 43 ein Signal vom Ausgang $\bar{Q}$, so daß am Ende des Farbsynchronsignals der Zähler 38 um einen Schritt abwärts zählt. Mit dieser Schaltung wird also nur die Richtung der Abweichung ausgewertet und unabhängig von deren Größe nur um einen Schritt korrigiert. Das eigentliche Tiefpaßverhalten erhält die Schaltung dadurch, daß nur die höchsten Stellen des Zählers 38 über die Leitung 39 herausgeführt werden. Damit insbesondere beim Einschalten des Fernsehgerätes oder beim Umschalten auf einen anderen Sender das Einschwingen der Schaltung schneller erfolgt, wird der Zähler 38 zunächst über die Leitung 45 auf einen Anfangswert gesetzt, der vorzugsweise der Normamplitude des Farbsynchronsignals entspricht. Bei beiden Amplitudendetektoren nach Fig. 3 und Fig. 4 ist der maximale Abtastwert bestimmend, so daß es sich um Spitzenwertdetektoren handelt.

Der in Fig. 6 dargestellte Amplitudendetektor enthält wieder einen Betragsbildner 36, dessen Ausgangssignal auf den einen Eingang eines Addierers 46 führt. Dessen Ausgang 47 führt auf ein Speicherregister 48, dessen Ausgang 49, der alle Stellen umfaßt, auf den anderen Eingang des Addierers 46 führt. Das Speicherregister 48 erhält während des S2-Impul-ses über den Takteingang T eine vorbestimmte Anzahl von Taktsignalen aus der Synchronisierschaltung 18 in Fig. 1, wobei mit jedem Taktsignal der am Eingang des Speicherregisters 48 anstehende Wert darin eingeschrieben wird. Der Addierer 46 und das Speicherregister 48, das selbstverständlich zu Beginn jedes Farbsynchronsignals gelöscht wird, und zwar hier wieder durch den S1'-Impuls, bilden also einen Akkumulator, der während jedes Farbsynchronsignals eine Anzahl aufeinanderfolgender Abtastwerte aufsummiert, die zweckmäßig gleich einer ganzen Potenz von 2 ist. Über die Leitung 11 werden dann nur die höchsten Stellen des Speicherregisters 48 herausgeführt und die unteren Stellen entsprechend dieser Potenz von 2 weggelassen, so daß die Werte der Dualwerte auf der Leitung 11 den mittleren Wert der Amplitude des Farbsynchronsignals angeben.

Wenn bei den Amplitudendetektoren gemäß den Fig. 4 bis 6 der Abtasttakt des Analog-Digital-Wandlers 16 in Fig. 1 so mit dem Farbsynchronsignal phasenverkoppelt sind, wie dies in Fig. 2 in den Zeilen a) und b) dargestellt ist, so daß das Farbsynchronsignal dann jeweils 45° vor bzw. nach einem Nulldurchgang abgetastet wird, liefern die in den Fig. 3 bis 5 dargestellten Amplitudendetektoren am Ende des Farbsynchronsignals nicht den Maximalwert von dessen Amplitude, sondern einen um den Faktor $\frac{1}{2}\sqrt{2}$ kleineren Wert, was jedoch bei der anschließenden Verarbeitung in der Steuerschaltung 14 ohne weiteres berüksichtigt werden kann.

Falls eine solche Phasenverkopplung zwischen Farbsynchronsignal und Abtasttakt nicht bzw. noch nicht vorhanden ist, kann unter Umständen eine Abtastung des Farbsynchronsignals im Maximum erfolgen, so daß dann ein zu hoher Wert vorgetäuscht wird. Dies kann mit einer anderen Ausführung des Amplitudendetektors vermieden werden.

Es läßt sich zeigen, daß eine Quadrierung der Farbsynchronsignalabtastwerte eine Phasenabhängigkeit eliminiert; für den quadraturmodulierten Farbträger gilt:

$$F(t) = (u \cdot \cos\omega_F t \pm v \cdot \sin\omega_F t)$$

Für das Farbsynchronsignal gilt dann mit $u = v = U_o$

$$F(t) = U_o(\cos\omega_F t \pm \sin\omega_F t)$$

$$\begin{aligned}
F^2(t) &= U_o^2(\cos\omega_F t \pm \sin\omega_F t)^2 \\
&= U_o^2(\cos^2\omega_F t \pm 2\cos\omega_F t \cdot \sin\omega_F t + \sin^2\omega_F t) \\
&\quad \text{mit } \cos^2\omega_F t + \sin^2\omega_F t = 1 \\
F^2(t) &= U_o^2(1 \pm 2 \cdot \cos\omega_F t \cdot \sin\omega_F t) \\
&\quad \text{mit } 2 \cdot \sin\omega \cos\omega = \sin 2\omega \\
F^2(t) &= U_o^2(1 \pm \underbrace{\sin 2\omega_F t}) \\
&\quad \quad \text{DC-Anteil} \quad \text{Oberwelle 8,8 MHz}
\end{aligned}$$

Das Ergebnis von $F^2(t)$ ist ein konstanter Anteil $U^2_o$ und ein hochfrequenter Anteil $\sin 2\omega_F t$. Dieser hochfrequente Anteil kann mit einem einfachen Filter ausgedrückt werden, das ebenfalls als digitales Filter ausgebildet ist und eine Grenzfrequenz genügend unterhalb der doppelten Farbsynchronsignalfrequenz hat. Für die Quadrierung der aufeinanderfolgenden Abtastwerte kann ein üblicher Multiplizierer verwendet werden, der auch als Wertetabelle in Form eines Festwertspeichers ausgeführt sein kann.

Dies bedeutet jedoch einen gewissen zusätzlichen Aufwand.

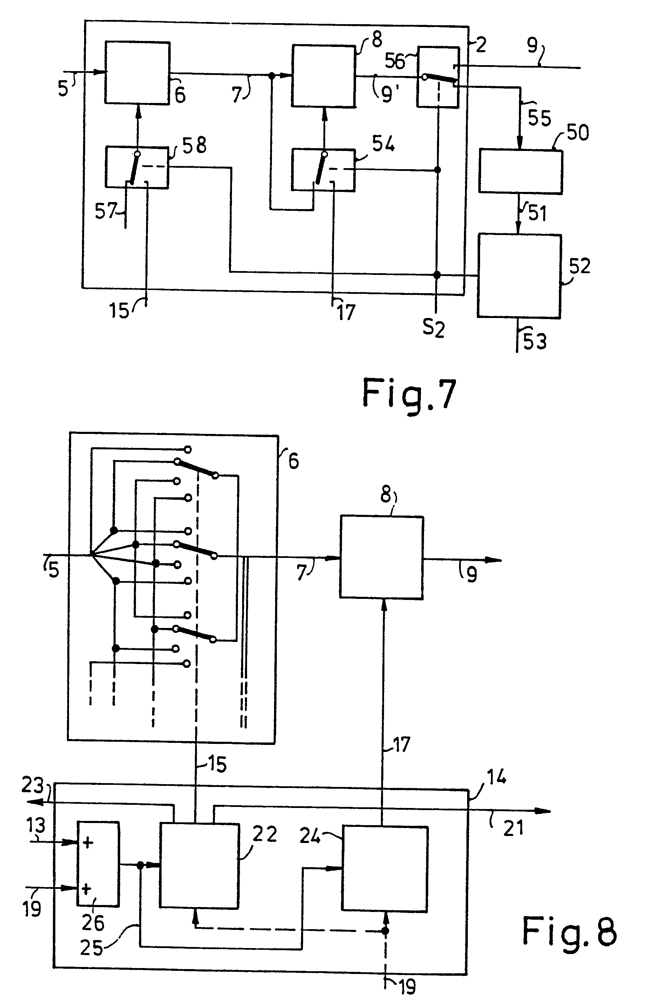

Andererseits wird während der Zeit des Farbsynchronsignals der Multiplizierer 8 in Fig. 1 nicht benötigt, da dann ja kein Nutz-Farbsignal vorhanden ist, so daß dieser Multiplizierer für die Quadrierung verwendet werden kann. Eine entsprechend ausgebildete Aordnung zur Amplitudendetektion ist in Fig. 7 dargestellt. Darin ist dem Steuereingang der Shift-Stufe 6 ein Umschalter 58 vorgeschaltet, der diesen Eingang von der Vielfachleitung 15, die von der Steuerschaltung 14 kommt, auf ein über die Vielfachleitung 57 zugeführtes externes Signal umschaltet, so daß während der Quadrierung stets die definierte gleiche Stellenverschiebung vorhanden ist. Ferner ist dem Multiplikatoreingang des Multiplizierers 8 ein Umschalter 54 vorgeschaltet, der diesen Eingang von der Vielfachleitung 17 auf die Leitung 7 umschaltet, die auf den Multiplikandeneingang des Multiplizierers 8 führt. Die Ausgangsleitung 9' des Multiplizierers 8 fuhrt schließlich auf einen Umschalter 56, der diesen Ausgang vom Ausgang 9 des Verstärkers 2 auf die Ausgangsleitung 55 umschaltet. Diese Umschalter werden von dem bereits ervähnten Signal 52, das nur während des Farbsynchronsignals auftritt, in die dargestellte Stellung umgeschaltet. Dadurch tritt am Ausgang 55 eine Folge von verarbeiteten Abtastwerten auf, die einer Gleichspannung mit einem überlagerten Wechselsignal entspricht. Das Wechselsignal wird durch ein digitales Tiefpaßfilter 50 ausgefiltert, so daß auf der Leitung 51 nur noch die Abtastwerte entsprechend dem Gleichanteil übrig bleiben.

Diese Abtastwerte werden in einem Akkumulator 52 aufsummiert. Am Ende des Schaltsignals S2 wird ein Bruchteil der so gebildeten Summe entsprechend der Anzahl der aufsummierten Werte als Mittelwert auf der Leitung 53 ausgegeben. Dieses Ausgangssignal $\bar{U}^2_B$ stellt dann das Quadrat des Mittelwertes gemäß folgender Gleichung dar:

$$\bar{U}^2_B = \frac{\sum\limits_1^N U_n^2}{N} \, ,$$

wobei $U_n$ die aufeinanderfolgenden Abtastwerte sind. Die Tatsache, daß es sich hier um das Quadrat des Mittelwertes handelt, kann bei der anschließenden Verarbeitung dieses Wertes in der Steuerschaltung 14 berücksichtigt werden. Wenn der Wert N eine ganzzahlige Potenz von 2 ist, kann die Division durch diesen Wert durch eine einfache Stellenverschiebung des akkumulierten Wertes erreicht werden.

Ein solcher Wert für N läßt sich leicht dadurch erreichen, daß nur während eines Teils der Zeitdauer des Farbsynchronsignals aufakkumuliert wird. Falls der Wert N jedoch nicht als ganzzahlige Potenz von 2 gewählt wird, kann anstelle der Division durch den Wert N eine Stellenverschiebung entsprechend der am nächsten liegenden ganzzahligen Potenz von 2 erfolgen, so daß ein um einen konstanten Faktor größerer bzw. kleinerer quadrierter Mittelwert erscheint. Auch dieser konstante Faktor kann in der Steuerschaltung 14 leicht berücksichtigt werden.

Die Berücksichtigung der Tatsache, daß der Amplitudendetektor den quadrierten Mittelwert liefert, der ggf. mit einem konstanten Faktor multipliziert ist, ist besonders einfach, wenn die Steuerschaltung 14 in Fig. 1 durch einen Mikroprozessor realisiert wird, der häufig für andere Aufgaben bereits vorhanden ist und zeitverschachtelt hierfür verwendet werden kann, so daß wenig zusätzlicher Aufwand erforderlich ist. Für die Berechnung des Quotienten aus dem vorgegebenen, ggf. einstellbaren Wert und dem digitalen Amplitudenwert, ggf. nach Berechnung dessen Wurzel, sowie für die Erzeugung des Steuersignals für die Shift-Stufe und dem Multiplikator steht dem Mikroprozessor eine Zeitdauer von mehreren Zeilen eines Fernsehbildes zur Verfügung.

Dadurch wirkt sich der zu Beginn einer Zeile ermittelte Amplitudenwert zwar erst in späteren Zeilen aus, jedoch ist dies praktisch ohne Bedeutung, wenn dem Amplitudendetektor ein Tiefpaßfilter 12 nachgeschaltet ist, wie in Fig. 1 dargestellt ist. Auch die Erzeugung der beschriebenen Signale auf den Leitungen 21 und 23 in Fig. 1 aus einer vom Amplitudendetektor ermittelten Amplitude eines Störsignals ist leicht mit dem gleichen Mikroprozessor möglich.

Eine andere Realisierung der Steuerschaltung 14 ist in Fig. 8 dargestellt. Darin sind zwei Festwertspeicher 22 und 24 vorgesehen, die beide parallel von einem Addierer 26 über die Leitung 25 adressiert werden und somit wie ein einziger Festwertspeicher mit größerer Wortbreite wirken.

Der Addierer 26 erhält den Amplitudenwert über die Leitung 13 und den vorgegebenen Wert über die Leitung 19 und bildet die Summe aus beiden Werten. Wenn der vorgegebene Wert geändert wird, wirkt sich dies auf die Summe, d. h. auf die Adresse der Festwertspeicher 22 und 24, wie eine scheinbare Veränderung des Amplitudenwertes und damit auf den einstellbaren Verstärker 2 als eine Änderung der gegenüber dem Leuchtdichtesignal nominalen Verstärkung aus, d.h. die Farbsättigung des wiedergegebenen Farbbildes wird größer bzw. kleiner. Der über die Leitung 19 zugeführte Wert kann auch die Adressierung der Festwertspeicher 22 und 24 über zusätzliche Adresseneingänge umschalten, wie gestrichelt angedeutet ist, so daß der Addierer 26 gespart werden kann, wobei allerdings eine größere Kapazität der Festwertspeicher 22 und 24 notwendig ist. Wenn der vorgegebene Wert konstant ist, weil beispielsweise die Einstellung der Farbsättigung an einer anderen Stelle im gesamten Farbartsignalverlauf erfolgen soll, kann selbstverständlich der Addierer 26 weggelassen und die Leitung 13 mit der Leitung 25 verbunden werden.

Die in der Steuerschaltung 14 durchzuführende Division erfolgt also mit Hilfe einer Wertetabelle, die in den Festwertspeichern abgespeichert ist. Dabei enthält der Festwertspeicher 24 den zu einem bestimmten Amplitudenwert gehörigen Multiplikator, der über die Leitung 17 dem Multiplikatoreingang des Multiplizierers 8 zugeführt wird. Der Festwertspeicher 22 enthält an jeder Stelle das zugehörige Steuersignal zur Steuerung der Stellenverschiebung. Bei einer Stellenverschiebung von beispielsweise maximal fünf Stellen sind also 3 Bit für die Steuerung der Shift-Stufe 6 über die Leitung 15 erforderlich.

Die Shift-Stufe ist vorzugsweise als elektronischer Multiplexer ausgeführt, der durch je einen mehrstufigen Umschalter für jedes Bit des auf der Ausgangsleitung 7 auszugebenden Dualwortes dargestellt werden kann, wie in Fig. 8 gezeigt ist. Die Umschalter werden dabei alle parallel durch das Steuersignal über die Leitung 15 betätigt. Das über die Leitung 5 zugeführte Dualwort hat im vorliegenden Beispiel etwa 11 Bit, die aus einem 8-Bit-Dualwort des Analog-Digital-Wandlers 16 durch die Verarbeitung im digitalen Filter 4 entstanden sind, wenn dieses auf geringe Bandbreite geschaltet ist, während das über die Leitung 7 ausgegebene Dualwort beispielsweise 6 Bit hat. Dadurch ist in jedem Fall eine ausreichende Anzahl signifikanter Bitstellen vorhanden.

Die im Festwertspeicher 22 vorhandenen Dualworte haben bei Verwendung handelsüblicher integrierter Speicherbausteine allgemein eine Breite von 8 Bit, so daß noch einige Bitstellen übrig sind, die nicht zur Steuerung der Shift-Stufe 6 benötigt werden. In einigen dieser Bitstellen können die Schaltsignale für die Umschaltung des Farbartsignalfilters 4 in Fig. 1 und die Abschaltung des Farbartsignals enthalten sein, die über die Leitung 23 bzw. 21 abgegeben werden, wenn der Steuerschaltung 14 über die Leitung 13 die ermittelte Störsignalamplitude zugeführt wird. Diese Signale auf den Leitungen 21 und 23 werden zweckmäßig zwischengespeichert, was der Einfachheit halber nicht dargestellt ist, damit sie während der anschließenden Verarbeitung der Amplitude des Farbsynchronsignals wirksam bleiben. Die Schwellwerte der Störsignalamplitude, bei denen die Umschaltung des Farbartsignalfilters 4 oder die Abschaltung des Farbartsignals erfolgt, werden also durch die Adressen des Festwertspeichers 22, an dem die Schaltsignale gespeichert sind bzw. sich ändern, gebildet. Während des Verarbeitung der Störsignalamplitude ist der über die Leitung 19 zugeführte Wert zweckmäßig auf Null oder einen geeigneten festen Wert geschaltet.

Die Umschaltung des Farbartsignalfilters und die Abschaltung des Farbartsignals kann auch statt abhängig von oder zusätzlich durch die Amplitude eines Störsignals in einem bildinformationsfreien Zeitabschnitt durch die Amplitude des Farbsynchronsignals erfolgen. Wenn nämlich die über die Leitung 13 gelieferte Farbsynchronsignalamplitude so gering ist, daß mit einer erheblichen Verfälschung bzw. Störung des Farbartsignals durch Rauschen gerechnet werden kann, können an den diesen Farbsynchronsignalamplitudenwerten zugeordneten Adressen beispielsweise des Festwertspeichers 22 an noch freien Bitstellen Schaltsignale gespeichert werden, die bei zusätzlicher Auswertung der Störsignalamplitude mit den dabei erzeugten Schaltsignalen logisch verknüpft über die Leitungen 21 und 23 ausgegeben werden.

Der in Fig. 1 dargestellte Tiefpaß 12 kann als rekursives Tiefpaßfilter zugeführt werden, wie dies in Fig. 9 dargestellt ist. Die vom Amplitudendetektor über die Leitung 11 nacheinander gelieferten ungefilterten Amplitudenwerte C(t) werden dem einen Eingang eines Addierers 62 zugeführt, dessen Ausgang 63 mit einer Registerstufe 66 für ein mehrstelliges Dualwort verbunden ist. Der Ausgang 67 dieser Registerstufe ist mit einer Dividierschaltung 68 verbunden, die hier vorzugsweise durch eine Stellenverschiebung um eine Anzahl Stellen realisiert ist. Wenn die Registerstufe 66 jeweils um die Laufzeit der Addierstufe 62 verzögert nach dem Ende des Farbsynchronsignals den auf der Leitung 63 vorhandenen Wert übernimmt, stellt die am Ausgang 13 der Stufe 68 auftretende Folge von Dualwörtern den gefilterten Amplitudenwert in seinem zeitlichen Verlauf dar.

Der Ausgang 67 der Registerstufe 66 und der Ausgang 13 der Stufe 68 sind ferner mit den beiden Eingängen eines Subtrahierers 64 verbunden, dessen Ausgang 65 auf den anderen Eingang des Addierers 62 führt. Das Ausgangssignal a(t) auf der Leitung 13 hängt dann auf folgende Weise von dem zugeführten ungefilterten Amplitudenwert C(t) ab:

$$a(t) = \frac{p-1}{p} a(t-1) + \frac{1}{p} C(t)$$

Bei entsprechender Wahl des Divisors p in der Stufe 68 kann also erreicht werden, daß ein neu zugeführter Amplitudenwert sich nur sehr wenig im Ausgangssignal auswirkt, so daß einzelne Störungen in einem Farbsynchronsignal sich nur gering auswirken. Ohnehin wird bei jedem Farbsynchronsignal nur ein einziger Amplitudenwert am Ausgang des Amplitudendetektors 10 in Fig. 1 erzeugt.

Bei Verwendung eines Mikroprozessors in der Steuerschaltung 14 kann dieser auch die Tiefpaßfilterung vor der Division durchführen, wobei lediglich zwei arithmetische Operationsschritte und eine Stellenverschiebung durch einen Shiftvorgang notwendig sind. Dadurch kann der Aufwand noch weiter verringert werden.

Schließlich kann bei Vervendung eines Mikroprozessors auch die Bestimmung der Amplitude des Farbsynchronsignals und ggf. des Störsignals in einem bildinformationsfreien Zeitabschnitt damit durchgeführt werden. Bei jeder Amplitudenbestimmung muß aber eine Anzahl unmittelbar aufeinanderfolgender Abtastwerte verarbeitet werden, die mit einer Folgefrequenz von ca. 17,7 MHz auftreten. Da Mikroprozessoren für solch hohe Verarbeitungsgeschwindigkeiten sehr aufwendig und teuer sind, kann die Tatsache zunutze gemacht werden, daß nach jeweils einer Anzahl aufeinanderfolgender Abtastwerte für die

**0 074 682**

Amplitudenbestimmung eine relativ wesentlich größere Pause auftritt. Die zusammenhängend zu verarbeitenden Abtastwerte werden daher zunächst in einen Pufferspeicher eingeschrieben, wofür preiswerte integrierte Halbleiterbauelemente mit ausreichender Geschwindigkeit erhältlich sind, da es sich jeweils nur um eine begrenzte Anzahl von beispielsweise 40 bis 60 Abtastwerten handelt, und anschließend wird der Pufferspeicher entsprechend dem Arbeitstakt des Mikroprozessors ausgelesen und sein Inhalt diesem zugeführt.

Die Abtastwerte können dann mit geringerer Geschwindigkeit in der gleichen Weise verarbeitet werden, wie dies in den Amplitudendetektoren nach den Fig. 4 bis 7 mit der Auftrittsgeschwindigkeit der Abtastwerte erfolgt. Es ist dann außer dem steuerbaren Verstärker 2 in Fig. 1 nur ein Pufferspeicher und ein einziger Mikroprozessor im Anschluß an das Farbartsignalfilter 4 notwendig, so daß sich eine sehr einfache und preisgünstige Lösung ergibt.

**Patentansprüche**

1. Schaltungsanordnung zum Einstellen der Amplitude des von dem Gesamt-Farbbildsignalgemisch abgetrennten Farbartsignals in einem festen Verhältnis zum Leuchtdichtesignal mittels eines einstellbaren Verstärkers (2), der abhängig von der Amplitude des Farbsynchronsignals gesteuert wird, und in dem das Farbartsignal als Folge digitalisierter Abtastwerte in Dualdarstellung vorliegt,
dadurch gekennzeichnet, daß das Farbartsignal in dem einstellbaren Verstärker (2) eine Shift-Stufe (6), in der jeder Abtastwert um eine steuerbare ganze Anzahl Stellen verschiebbar ist, und einen Multiplizierer (8) durchläuft, daß ein Amplitudendetektor (10) die Amplitude des vor dem einstellbaren Verstärker (2) vorhandenen Farbsynchronsignals (Burst) als digitalen Amplitudenwert ermittelt, und daß eine Steuerschaltung (14) aus dem Quotienten eines vorgegebenen Wertes und diesem Amplitudenwert ein Schiebesteuersignal für die Shift-Stufe (6), das die Anzahl der Stellen bestimmt, um die jeder Abtastwert verschoben wird, und für den Multiplizierer (8) den Multiplikator, mit dem die stellenverschobenen Abtastwerte multipliziert werden, erzeugt.

2. Schaltungsanordnung nach Anspruch 1,
dadurch gekennzeichnet, daß das Verhältnis des von der Steuerschaltung (14) bei verschiedenen Größen des digitalen Amplitudenwertes erzeugten maximalen und minimalen Multiplikators $k_1$ höchstens gleich 2 ist, wobei vorzugsweise $0,5 < k_1 < 1$ ist.

3. Schaltungsanordnung nach Anspruch 1 oder 2,
dadurch gekennzeichnet, daß der Amplitudendetektor (10) einen Betragsbildner (36), einen digitalen Vergleicher (30) und ein Speicherregister (32) für einen digitalen Abtastwert des Farbsignals enthält, daß der eine Eingang des Vergleichers (30) und der Eingang des Speicherregisters (32) mit dem Ausgang des Betragsbildners (36) verbunden sind, daß der andere Eingang des Vergleichers (30) mit dem Ausgang des Speicherregisters (32), der den Amplitudenwert liefert, verbunden ist, daß der Vergleicher (30) ein Ausgangssignal erzeugt, wenn das Ausgangssignal des Betragsbildners (36) größer ist als das Ausgangssignal des Speicherregisters (32), und daß eine Steuerstufe (34) den Inhalt des Speicherregisters (32) mindestens vor jedem neuen Farbsynchronsignal löscht und nur während der Dauer des Farbsynchronsignals bei einem Ausgangssignal des Vergleichers (30) das Einspeichern eines neu zugeführten Abtastvertes in das Speicherregister (32) freigibt.

4. Schaltungsanordnung nach Anspruch 1 oder 2,
dadurch gekennzeichnet, daß der Amplitudendetektor (10) einen Betragsbildner (36), einen Vergleicher (30) und einen Vor-Rück-Zähler (38) enthält, daß der Vergleicher (30) das Ausgangssignal des Zählers (38) mit allen während einer Farbsynchronsignalperiode zugeführten Abtastwerten vergleicht und dem Zähler (38) einen Zähltakt zuführt, wobei das Vergleichsergebnis die Zählrichtung steuert, wenn nicht der höchste der in einer Farbsynchronsignalperiode zugeführte Abtastwert gerade gleich dem Ausgangssignal des Zählers (38) ist, und daß nur die höchsten Stellen des Zählers (38) den Amplitudenwert liefern.

5. Schaltungsanordnung nach Anspruch 1 oder 2,
dadurch gekennzeichnet, daß der Amplitudendetektor (10) einen Betragsbildner (36), eine Recheneinheit (46) und ein Speicherregister (48) enthält, daß die Recheneinheit (46) aufeinanderfolgende Abtastwerte während der Dauer des Farbsynchronsignals jeweils zum Inhalt des vorher auf Null gesetzten Speicherregisters (48) addiert und daß nach dem Ende des Farbsynchronsignals der Inhalt der höchsten Stellen des Speicherregisters (48) den Amplitudenwert darstellt.

6. Schaltungsanordnung nach Anspruch 1 oder 2,
dadurch gekennzeichnet, daß die digitalisierten Abtastwerte eine digitale Quadrierschaltung durchlaufen, daß ein an deren Ausgang über ein digitales Tiefpaßfilter (50) mit einer Grenzfrequenz kleiner als die doppelte Frequenz des Farbsynchronsignals angeschlossener Akkumulator (52) eine vorgegebene Anzahl quadrierter gefilterter Abtastwerte aufsummiert Und daß ein der vorgegebenen Anzahl entsprechender Bruchteil des im Akkumulator (52) aufsummierten Wertes der Steuerschaltung (14) zugeführt wird.

7. Schaltungsanordnung nach anspruch 6,
dadurch gekennzeichnet, daß die Quadrierschaltung der Multiplizierer (8) ist und drei Umschalter (54, 56, 58) vorgesehen sind, die während des Farbsynchronsignals betätigt werden und von denen der erste Umschalter (54) den Multiplikatoreingang des Multiplizierers (8) vom Ausgang (17) der Steuerschaltung (14) auf den Multiplikandeneingang (7) umschaltet, der zweite Umschalter (56) den Ausgang (9') des Multiplizierers (8) von dem Ausgang (9) des einstellbaren Verstärkers (2) auf den Eingang des Tiefpaßfilters (50) umschaltet und der dritte Umschalter (58) den Steuereingang der Shift-Stufe (6) vom Ausgang (15) der Steuerschaltung (14) auf ein festes Steuersignal (57) umschaltet.

8. Schaltungsanordnung nach einem der Ansprüche 3 bis 7,
dadurch gekennzeichnet, daß das Ausgangssignal des Amplitudendetektors (10) in einem bildinformationsfreien Zeitabschnitt, insbesondere während mindestens eines Teils der Vertikal-Austastlücke, bei Überschreiten vorgegebener Schwellwerte nacheinander zunächst die Durclaßkurve des dem einstellbaren Verstärker (2) vorgeschalteten Farbartsignalfilters (4) auf Kleinere Bandbreite umschaltet und schließlich das Farbartsignal abschaltet.

9. Schaltungsanordnung nach Anspruch 1 oder einem der folgenden,
dadurch gekennzeichnet, daß die Steuerschaltung (14) einen Dividierer enthält, der den vorgegebenen Wert durch den Amplitudenwert dividiert.

10. Schaltungsanordnung nach Anspruch 9,
dadurch gekennzeichnet, daß der Dividierer durch einen Festwertspeicher (22, 24) gebildet ist, dessen Adressensignale von dem digitalen Amplitudenwert abgeleitet sind und der an jeder Adresse das dieser Amplitude zugehörige Steuersignal und den zugehörigen Multiplikator enthält.

11. Schaltungsanordnung nach Anspruch 10,
dadurch gekennzeichnet, daß der Festwertspeicher in mehrere Teilspeicher (22, 24) aufgeteilt ist, von denen einige Teilspeicher (22) das Steuersignal und andere Teilspeicher (24) den Multiplikator enthalten, wobei alle Teilspeicher parallel adressiert werden.

12. Schaltungsanordnung nach Anspruch 1 oder einem der folgenden,
dadurch gekennzeichnet, daß der vorgegebene Wert insbesondere zur Einstelung der Farbsätigung einstellbar ist.

13. Schaltungsanordnung nach Anspruch oder 11 und 12,
dadurch gekennzeichnet, daß der einstellbare Wert mit Hilfe einer Recheneinheit (26) den Amplitudenwert verschiebt und der verschobene Amplitudenwert die Adresse des bzw. der Festwertspeicher (22, 24) darstellt.

14. Schaltungsanordnung nach einem der Ansprüche 1 bis 9,
dadurch gekennzeichnet, daß die Steuerschaltung (14) einen Mikroprozessor enthält, der den Dividierer realisiert und jeweils zwischen mehreren Farbsynchronsignalen das Steuersignal und den Multiplikator erzeugt.

15. Schaltungsanordnung nach Anspruch 1 oder einem der folgenden,
dadurch gekennzeichnet, daß dem Amplitudendetektor (10) ein digitaler Tiefpaß (12) nachgeschaltet ist.

16. Schaltungsanordnung nach Anspruch 15,
dadurch gekennzeichnet, daß der Tiefpaß (12) als digitales rekursives Filter erster Ordnung mit einem Speicherregister (66) für einen Abtastwert und einem Addierer/Sub trahierer (62, 64) ausgebildet ist, der den Eingangs-Abtastwert zu dem Inhalt des Speicherregisters (66) addiert und einen vorgegebenen Bruchteil des Inhalts des Speicherregister (66), der auch den Ausgangswert des Tiefpasses (12) darstellt, davon subtrahiert und das Ergebnis nach dem Ende des Farbsynchronsignals in das Speicherregister (66) einschreibt.

17. Schaltungsanordnung nach Anspruch 14 und 15,
dadurch gekennzeichnet, daß der Mikroprozessor die Ausgangssignale des Amplitudendetektors (10) erhält und vor Bestimmung des Steuersignales und des Multiplikators mit jeweils einer Anzahl vorhergehender Amplitudenwerte eine Tiefpaßfilterung durchführt.

18. Schaltungsanordnung nach Anspruch 17 mit einer rekursiven Tiefpaßfilterung der Amplitudenwerte entsprechend dem Tiefpaß gemäß Anspruch 16,
dadurch gekennzeichnet, daß der Mikroprozessor zur Durchführung der Tiefpaßfilterung dient.

19. Schaltungsanordnung nach Anspruch 18 zur Verarbeitung mindestens einer Anzahl von Abtastwerten des Farbsynchronsignals entsprechend einem der Ansprüche 3 bis 6,
dadurch gekennzeichnet, daß der Mikroprozessor zur Durchführung der Bestimmung des Amplitudenwertes derart ausgebildet ist, daß die Anzahl Abtastwerte des Farbsynchronsingales zwischengespeichert und mit niedrigerer Frequenz ausgelesen und dem Mikroprozessor zur Verarbeitung zugeführt werden.

## Claims

1. A circuit for adjusting a fixed amplitude ratio between a chrominance signal separated from a composite colour television signal and a luminance signal by means of a variable-gain amplifier (2), the gain of which is controlled in dependence on the amplitude of a colour burst and in which the chrominance signal is available as a binary representation of a sequence of digitized sample values, characterized in that the chrominance signal in the variable-gain amplifier (2) passes through a shift stage (6), in which a sample can be shifted for a controllable integral number of bit positions, and through a multiplier (8), in that an amplitude detector (10) placed before the variable-gain amplifier (2) measures the amplitude of the colour burst as a digital amplitude value, and in that a control circuit (14) produces from the quotient of a preset value and this measured

0074682

amplitude value a shift control signal for the shift stage (6), determining the number of bit positions by which each sample value is shifted, and produces for the multiplier (8) the multiplication factor by which the shifted samples are multiplied.

2. A circuit as claimed in Claim 1, characterized in that the ratio between the maximum and minimum multiplication factors $k_1$ which are supplied by the control circuit (14) at different magnitudes of the measured digital amplitude value is not more than 2, preference being given to $(0,5 \leqslant k_1 < 1$.

3. A circuit as claimed in Claim 1 or 2, characterized in that the amplitude detector (10) comprises an absolute value-generator (36), a digital comparator (30) and a storage register (32) for a digital sample of the chrominance signal, in that one input of the comparator (30) and the input of the storage register (32) are connected to the output of the absolute value-generator (36), in that the other input of the comparator (30) is connected to the output of the storage register (32) which supplies the amplitude value, in that the comparator (30) produces an output signal if the output signal of the absolute valuegenerator (36) exceeds the output signal of the storage register (32) and in that a control stage (34) erases the contents of the storage register (32) at least prior to each new colour burst and enables the storage of a new, applied sample into the storage register (32) only during the colour burst at the occurrence of an output signal of the comparator (30).

4. A circuit as claimed in Claim 1 or 2, characterized in that the amplitude detector (10) comprises an absolute up/down value generator (36), a comparator (30) and an up/down counter (38), in that the comparator (30) compares the outpur signal of the counter (38) with all the samples applied to the comparator during a colour burst and applies a clock pulse to the counter (38), the result of the comparison controlling the counting direction, if the highest sample value of the samples applied during a colour burst is not equal to the output signal value of the counter (38), and in that only the highest positions of the counter (38) supply the amplitude value.

5. A circuit as claimed in Claim 1 or 2, characterized in that the amplitude detector (10) comprises an absolute value-generator (36), an arithmetic unit (46) and a storage register (48), in that during the colour burst the arithmetic unit (46) adds each of the consecutive samples to the content of the storage register (48) which was previously reset to zero, and in that after the colour burst has occurred the contents of the highest bit positions of the storage register (48) represent the amplitude value.

6. A circuit as claimed in Claim 1 or 2, characterized in that the digitized samples pass through a digital squaring circuit, in that an accumulator coupled to its output (52) via a digital low-pass filter (50) having a cutoff frequency less than twice the frequency of the colour burst adds together a preset number of squared, filtered samples and in that a fraction of the values added together in the accumulator (52), which fraction corresponds to the preset number of squared, filtered samples is applied to the control circuit (14).

7. A circuit as claimed in Claim 6, characterized in that the squaring circuit is the multiplier (8) and that three change-over switches (54, 56, 58) are provided, which are operated during the occurrence of the colour burst and of which the first change-over switch (54) switches the multiplication factor input of the multiplier (8) between the output (17) of the control circuit (14) and the multiplication factor input (7), the second change-over switch (56) switches the output (9') of the multiplier (8) between the output (9) of the controllable amplifier (2) and the input of the low-pass filter (50) and the third change-over switch (58) switches the control input of the shift stage (6) between the output (15) of the control circuit (14) and a fixed control signal (57).

8. A circuit as claimed in any of the Claims 3 to 7, characterized in that in a picture information-free time interval, more specifically, during at least a portion of the vertical blanking interval, when the predetermined threshold values are exceeded, the output signal of the amplitude detector (10) successively changes-over the response curve of the chrominance filter (4), arranged prior to the controllable amplifier (2), to a smaller bandwidth and finally switches off the chrominance signal.

9. A circuit as claimed in Claim 1 or one of the following Claims, characterized in that the control circuit (14) comprises a divider, which divides the predetermined value by the amplitude value.

10. A circuit as claimed in Claim 9, characterized in that the divider is a ROM-memory (22, 24) whose address signals are derived from the digital amplitude value and which at each address contains the control signal associated with this amplitude and the associated multiplication factor.

11. A circuit as claimed in Claim 10, characterized in that the ROM-memory is divided into several sub-memories (22, 24), some sub-memories (22) of which contain the control signal and other sub-memories (24) contain the multiplication factor, all sub-memories being addressed in parallel.

12. A circuit as claimed in Claim 1, or one of the following Claims, characterized in that the predetermined value is specifically adjustable for setting the colour saturation.

13. A circuit as claimed in Claim 10 or 11 and 12, characterized in that the adjustable value shifts the digital amplitude value by means of a calculating circuit (26) and the shifted amplitude value represents the address of one or all ROM-memory(ies) (22, 24).

14. A circuit as claimed in any one of the Claims 1 to 9, characterized in that a control circuit (14) comprises a microprocessor which forms the divider and generates between different colour bursts the control signal and the multiplication factor.

15. A circuit as claimed in Claim 1, or one of the following Claims, characterized in that the amplitude detector (10) is followed by a digital low-pass filter (12).

16. A circuit as claimed in Claim 15, characterized in that the low-pass filter (12) is arranged in the form of a first order digital recursive filter comprising a storage register (66) for a sample value and an adder/subtractor (62, 64) which adds the input sample value to the contents of the storage register (66) and subtracts a

13

predetermined fraction from the contents of the storage register (66), which also represents the output value of the low-pass filter (12) and writes the result into the storage register (66) at the end of the colour burst.

17. A circuit as claimed in Claims 14 and 15, characterized in that the microprocessor receives the output signals of the amplitude detector (10) and performs prior to the determination of the control signal and the multiplication factor a low-pass filtering operation each time with a number of predetermined amplitude values.

18. A circuit as claimed in Claim 17 having a recursive low-pass filtering of the amplitude values as realized with the low-pass filter as claimed in Claim 16, characterized in that the microprocessor performs a low-pass filtering operation.

19. A circuit as claimed in Claim 18 for processing at least a number of samples of the colour burst as claimed in one of the Claims 3 to 6, characterized in that the microprocessor for determining the amplitude value is constituted such, that the number of samples of the colour burst is stored temporarily and read at a lower frequency and applied to the microprocessor for further processing.

## Revendications

1. Montage de circuit pour régler l'amplitude du signal de chrominance séparé du signal complet en couleur, dans un rapport fixe avec le signal de luminance, à l'aide d'un amplificateur réglable (2) qui est piloté en fonction de l'amplitude du signal de synchronisation de couleur, et dans lequel le signal de chrominance est présent sous forme de séquence de valeurs d'échantillonnage digitalisées en notation binaire, caractérisé en ce que le signal de chrominance traverse, dans l'amplificateur réglable (2), un étage de décalage (6), dans lequel chaque valeur d'échantillonnage peut être déplacée d'un nombre entier pilotable de positions, et un multiplicateur (8), qu'un détecteur d'amplitude (10) détermine l'amplitude du signal de synchronisation de couleur (Burst) présent en amont de l'amplificateur réglable (2) sous la forme d'une valeur d'amplitude numérique, et qu'un circuit de commande (14) produit, à partir du quotient d'une valeur prédéfinie et de cette valeur d'amplitude, pour l'étage de décalage (6), un signal de commande de décalage qui détermine le nombre de positions duquel chaque valeur d'échantillonnage est décalée, et, pour le multiplicateur (8), le facteur de multiplication par lequel les valeurs d'échantillonnage décalées en position sont multipliées.

2. Montage de circuit suivant la revendication 1, caractérisé en ce que le rapport entre les facteurs de multiplication maximal et minimal $k_1$ que produit le circuit de commande (14) pour diverses grandeurs de la valeur d'amplitude numérique est tout au plus égal à 2, avec une préférence pour $0,5 \leqslant k_1 < 1$.

3. Montage de circuit suivant la revendication 1 ou 2, caractérisé en ce que le détecteur d'amplitude (10) contient un générateur de valeurs absolues (36), un comparateur numérique (30) et un registre de stockage (32) pour une valeur d'échantillonnage numérique du signal de chrominance, que la première entrée du comparateur (30) et l'entrée du registre de stockage (32) sont connectées à la sortie du générateur de valeurs absolues, que l'autre entrée du comparateur (30) est connectée à la sortie du registre de stockage (32) qui fournit la valeur d'amplitude, que le comparateur (30) produit un signal de sortie lorsque le signal de sortie du générateur de valeurs absolues (36) est supérieur au signal de sortie du registre de stockage (32), et qu'un étage de commande (34) efface le contenu du registre de stockage (32) au moins avant chaque nouveau signal de synchronisation de couleur et ne permet le stockage d'une valeur d'échantillonnage nouvellement amenée dans le registre de stockage (32) que pendant la durée du signal de synchronisation de couleur pour un signal de sortie du comparateur (30).

4. Montage de circuit suivant la revendication 1 ou 2, caractérisé en ce que le détecteur d'amplitude (10) contient un générateur de valeurs absolues (36), un comparateur (30) et un compteur-décompteur (38), que le comparateur (30) compare le signal de sortie du compteur (38) à toutes les valeurs d'échantillonnage amenées pendant une période de signal de synchronisation de couleur et fournit au compteur (38) une impulsion de comptage, le résultat de la comparaison commandant la direction de comptage, lorsque la valeur d'échantillonnage la plus élevée amenée dans une période de signal de synchronisation de couleur n'est pas précisément celle qui est égale au signal de sortie du compteur (38), et que seules les positions les plus élevées du compteur (38) fournissent la valeur d'amplitude.

5. Montage de circuit suivant la revendication 1 ou 2, caractérisé en ce que le détecteur d'amplitude (10) comprend un générateur de valeurs absolues (36), une unité de calcul (46) et un registre de stockage (48), que l'unité de calcul (46) additionne chaque fois des valeurs d'échantillonnage successives pendant la durée du signal de synchronisation de couleur au contenu du registre de stockage (48) préalablement mis à zéro et qu'après la fin du signal de synchronisation de couleur, le contenu des positions supérieures du registre de stockage (48) représente la valeur d'amplitude.

6. Montage de circuit suivant la revendication 1 ou 2, caractérisé en ce que les valeurs d'échantillonnage digitalisées traversent un circuit élévateur au carré numérique, qu'un accumulateur (52), connecté à sa sortie par l'intermédiaire d'un filtre passe-bas numérique (50) présentant une fréquence limite inférieure au double de la fréquence du signal de synchronisation de couleur, somme un nombre prédéfini de valeurs d'échantillonnage filtrées élevées au carré et qu'une fraction correspondant au nombre prédéfini de la valeur sommée dans l'accumulateur (52) est appliquée au circuit de commande (14).

7. Montage de circuit suivant la revendication 6, caractérisé en ce que le circuit élévateur au carré est le multiplicateur (8) et que sont prévus trois commutateurs (54, 56, 58), qui sont actionnés pendant le signal de synchronisation de couleur et parmi lesquels le premier commutateur (54) commute l'entrée de facteur de multiplication du multiplicateur (8) depuis la sortie (17) du circuit de commande (14) sur l'entrée de facteur de multiplication (7), le deuxième commutateur (56) commute la sortie (9') du multiplicateur (8) depuis la sortie (9) de l'amplificateur réglable (2) sur l'entrée du filtre passe-bas (50) et le troisième commutateur (58) commute l'entrée de commande de l'étage de décalage (6) depuis la sortie (15) du circuit de commande (14) sur un signal de commande fixe (57).

8. Montage de circuit suivant l'une quelconque des revendications 3 à 7, caractérisé en ce que le signal de sortie du détecteur d'amplitude (10) dans une période exempte d'information vidéo, en particulier pendant au moins une partie de l'intervalle de suppression de trame, en cas de dépassement de valeurs de seuil prédéfinies, successivement, commute d'abord la courbe de passage du filtre de signal de chrominance (4) précédant l'amplificateur réglable (2) sur une largeur de bande plus petite, puis interrompt finalement le signal de chrominance.

9. Montage de circuit suivant la revendication 1 ou l'une quelconque des revendications suivantes, caractérisé en ce que le circuit de commande (14) contient un diviseur qui divise la valeur prédéfinie par la valeur d'amplitude.

10. Montage de circuit suivant la revendication 9, caractérisé en ce que le diviseur est formé par une mémoire fixe (22, 24), dont les signaux d'adresses sont déduits de la valeur d'amplitude numérique et qui contient, à chaque adresse, le signal de commande associé à cette amplitude et le facteur de multiplication correspondant.

11. Montage de circuit suivant la revendication 10, caractérisé en ce que la mémoire fixe est subdivisée en plusieurs mémoires partielles (22, 24), dont certaines (22) contiennent le signal de commande et d'autres (24), le facteur de multiplication, toutes les mémoires partielles étant adressées en parallèle.

12. Montage de circuit suivant la revendication 1 ou l'une quelconque des revendications suivantes, caractérisé en ce que la valeur prédéfinie est réglable, en particulier pour le réglage de la saturation de couleur.

13. Montage de circuit suivant les revendications 10, 11 et 12, caractérisé en ce que la valeur réglable décale la valeur d'amplitude à l'aide d'une unité de calcul (26), la valeur d'amplitude décalée représentant l'adresse de la ou des mémoires fixes (22, 24).

14. Montage de circuit suivant l'une quelconque des revendications 1 à 9, caractérisé en ce que le circuit de commande (14) contient un microprocesseur qui réalise le diviseur et produit le signal de commande et le facteur de multiplication chaque fois entre plusieurs signaux de synchronisation de couleur.

15. Montage de circuit suivant la revendication 1 ou l'une quelconque des revendications suivantes, caractérisé en ce qu'un filtre passe-bas (12) est prévu en aval du détecteur d'amplitude (10).

16. Montage de circuit suivant la revendication 15, caractérisé en ce que le filtre passe-bas (12) à la forme d'un filtre récursif numérique du premier ordre avec un registre de stockage (66) pour une valeur d'échantillonnage et un additionneur/soustracteur (62, 64), qui ajoute la valeur d'échantillonnage d'entrée au contenu du registre de stockage (66) et en soustrait une fraction prédéfinie du contenu du registre de stockage (66), qui représente également la valeur de sortie du filtre passe-bas (12), et enregistre le résultat dans le registre de stockage (66) au terme du signal de synchronisation de couleur.

17. Montage de circuit suivant les revendications 14 et 15, caractérisé en ce que le microprocesseur reçoit les signaux de sortie du détecteur d'amplitude (10) et effectue un filtrage passe-bas avant la détermination du signal de commande et du facteur de multiplication, chaque fois avec plusieurs valeurs d'amplitude précédentes.

18. Montage de circuit suivant la revendication 17 assurant un filtrage passe-bas récursif des valeurs d'amplitude conformément à celui du filtre passe-bas de la revendication 16, caractérisé en ce que le microprocesseur sert à effectuer le filtrage passebas.

19. Montage de circuit suivant la revendication 18 pour traiter au moins un certain nombre de valeurs d'échantillonnage du signal de synchronisation de couleur suivant 1 une quelconque des revendications 3 à 6, caractérisé en ce que le microprocesseur est conçu, en vue de procéder à la détermination de la valeur d'amplitude, d'une manière telle que le nombre de valeurs d'échantillonnage du signal de synchronisation de couleur fasse l'objet d'un stockage intermédiaire et soit lu et appliqué au microprocesseur en vue du traitement à une fréquence plus basse.

Fig.1

Fig.2

FIG.9

FIG.3a

FIG.3b

Fig. 4

Fig. 5

Fig. 6

Fig.7

Fig.8